(19) Europäisches Patentamt / European Patent Office / Office européen des brevets

(11) **EP 2 461 401 B1**

(12) **EUROPEAN PATENT SPECIFICATION**

(45) Date of publication and mention
of the grant of the patent:
**13.11.2019 Bulletin 2019/46**

(21) Application number: **10804457.9**

(22) Date of filing: **28.07.2010**

(51) Int Cl.:
**H01M 8/0234** (2016.01)　　**H01M 8/1018** (2016.01)
**H01M 8/0245** (2016.01)　　**H01M 8/04119** (2016.01)
**H01M 8/0243** (2016.01)　　**H01M 4/86** (2006.01)

(86) International application number:
**PCT/JP2010/062720**

(87) International publication number:
**WO 2011/013711 (03.02.2011 Gazette 2011/05)**

(54) **USE OF A GAS DIFFUSION LAYER MEMBER IN A SOLID POLYMER FUEL CELL**

VERWENDUNG EINES GASDIFFUSIONSSCHICHTELEMENTS IN EINER FESTPOLYMERBRENNSTOFFZELLE

UTILISATION D'UN ELÉMENT DE COUCHE DE DIFFUSION DE GAZ DANS UNE PILE À COMBUSTIBLE POLYMÈRE SOLIDE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.07.2009 JP 2009175254**

(43) Date of publication of application:
**06.06.2012 Bulletin 2012/23**

(73) Proprietor: **W.L. Gore & Associates, Co., Ltd.**
**Tokyo 108-0075 (JP)**

(72) Inventors:
 • **NAMBA, Takafumi**
 **Tokyo 1080075 (JP)**
 • **OHASHI, Naoki**
 **Tokyo 1080075 (JP)**

(74) Representative: **HGF Limited**
 **1 City Walk**
 **Leeds LS11 9DX (GB)**

(56) References cited:
 JP-A- 2003 173 788　　JP-A- 2006 093 119
 JP-A- 2006 179 273　　JP-A- 2006 252 948
 JP-A- 2008 277 281　　JP-A- 2008 277 281
 US-A1- 2006 204 833

 • LITSTER S ET AL: "Ex situ visualization of liquid water transport in PEM fuel cell gas diffusion layers", JOURNAL OF POWER SOURCES, ELSEVIER SA, CH, vol. 154, no. 1, 9 March 2006 (2006-03-09), pages 95-105, XP027937520, ISSN: 0378-7753 [retrieved on 2006-03-09]
 • SPERNJAK ET AL: "Experimental investigation of liquid water formation and transport in a transparent single-serpentine PEM fuel cell", JOURNAL OF POWER SOURCES, ELSEVIER SA, CH, vol. 170, no. 2, 7 June 2007 (2007-06-07), pages 334-344, XP022107917, ISSN: 0378-7753, DOI: 10.1016/J.JPOWSOUR.2007.04.020

**Description**

Technical Field

The present invention relates to a gas diffusion layer member for a solid polymer type fuel cell and to such a solid polymer type fuel cell (polymer electrolyte fuel cell: PEFC).

Background Art

Fuel cells utilizing hydrogen and oxygen in principle only produce water as a reaction byproduct, so are being closely looked at as means for generating clean energy with little environmental impact. Among these, solid polymer type fuel cells are easy to handle and hold forth the promise of higher output and density, so there has been much research activity and attempts at commercialization. Their fields of application are vast. For example, power sources for moving bodies such as automobiles or buses, stationary power sources in the general home, power sources for compact portable terminals, etc. may be mentioned.

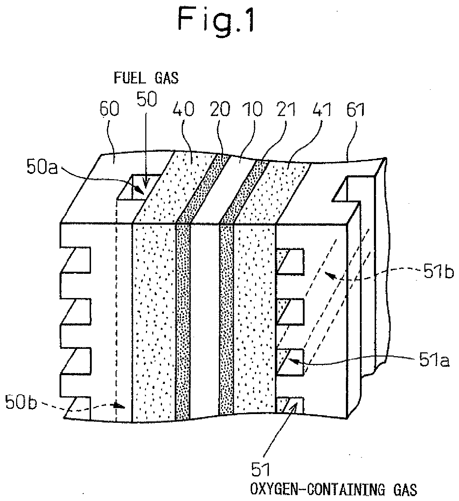

A solid polymer type fuel cell is comprised of a large number of unit cells stacked up. FIG. 1 shows the typical structure of a unit cell. In FIG. 1, a polymer electrolyte membrane (ion exchange membrane) 10 is sandwiched at its two sides by a pair of catalyst layers 20 and 21. Furthermore, these catalyst layers 20 and 21 are sandwiched at their two sides by a pair of carbon fiber current collector layers (also called porous support layers and gas diffusion layers) 40 and 41. The outsides of these carbon fiber current collector layers 40 and 41 are opened facing gas channels formed by separators 60 and 61 (fuel gas channel 50 and oxygen-containing gas channels 51). Fuel gas ($H_2$ etc.) which is introduced from the channel 50 passes through the first carbon fiber current collector layer (anode side carbon fiber current collector layer) 40 and reaches the first catalyst layer (anode and fuel electrode) 20. Here, the fuel gas releases electrons while generating protons ($H^+$) by the anode electrode reaction shown below. These protons pass through the polymer electrolyte membrane 10 and reach the second catalyst layer (cathode and oxygen electrode) 21. Here, the protons receive electrons and generate $H_2O$ by the cathode electrode reaction shown below:

Anode electrode reaction: $H_2 \rightarrow 2H^+ + 2e^-$

Cathode electrode reaction: $1/2O_2 + 2H^+ + 2e^- \rightarrow H_2O$

As the polymer electrolyte membrane 10, a perfluoro-based electrolyte such as Nafion® (made by DuPont) or a hydrocarbon-based electrolyte is generally being used. The polymer electrolyte membrane 10 requires accompanying $H_2O$ to conduct protons. Further, the catalyst layers 20 and 21 are comprised of a catalyst metal and proton conducting electrolyte. For these catalyst layers 20 and 21 to promote an electrode reaction, the presence of $H_2O$ is again required. For this reason, to maintain the polymer electrolyte membrane 10 and the catalyst layers 20 and 21 of the fuel cell in a suitable water-containing state during operation, usually the practice is to feed water vapor (moisturize the layers) through the feed gas (fuel gas 50 and oxygen-containing gas 51).

The $H_2O$ which was supplied for humidifying the fuel gas 50 dissolves in the electrolyte in the anode layer 20 and the polymer electrolyte membrane 10 and travels to the cathode side together with movement of the protons. Part of the $H_2O$ which was not used is exhausted as water vapor together with the exhaust gas to the outside of the system, while the remainder is exhausted as condensed water from a drain (not shown) to the outside of the system. Further, the $H_2O$ which was supplied for humidifying the oxygen-containing gas 51 similarly dissolves in the electrolyte in the catalyst layer 21 and the polymer electrolyte membrane 10. The $H_2O$ which was not used is exhausted together with the exhaust gas to the outside of the system or is exhausted as condensed water from a drain (not shown) to the outside of the system. In addition, the $H_2O$ which is produced by the electrode reaction of the cathode catalyst layer 21 partially reversely diffuses through the inside of the polymer electrolyte membrane 10 to travel to the anode side for use, while the remainder passes through the cathode side carbon fiber current collector layer 41 and is discharged from the system as water vapor or condensed water.

In the above way, as a result of the feed of $H_2O$, generation of $H_2O$, and travel of $H_2O$, the cathode layer 21 becomes a relatively $H_2O$ rich state. Therefore, it is necessary to make the $H_2O$ at the cathode layer 21 travel to the carbon fiber current collector layer 41 side using the water vapor pressure difference or $H_2O$ concentration difference as a drive force or make it further travel to the polymer electrolyte membrane 10 side using the $H_2O$ concentration difference as a drive force so as to thereby maintain it at a suitable amount.

In this respect, in an automobile or other moving body, the load of the fuel cell frequently changes during startup, running, stopping, etc., so the fuel cell mounted in this moving body preferably can be utilized under a broad range of operating conditions from low output to high output. Further, due to restrictions on the carried weight and size, the fuel cell has to be compact and light in weight. Furthermore, the gas feed devices (pump etc.), humidifying devices, and other additional devices are also being asked to be made lower in power consumption and lighter in weight. For example, the gas flow rate from the gas feed devices is generally, by air utilization rate, 40 to 50% or so, but if it were possible to further raise the air utilization rate, it would become possible to reduce the power consumption and lighten the weight of the gas feed devices. Further, to realize lower power consumption or lighter weight of the humidifying devices, it is desirable to reduce as much as possible the amount of humidification of the polymer electrolyte membrane 10 required at the time of fuel cell operation (low humidity operation or dry operation).

However, if reducing the amount of humidification, the difference in water vapor pressure between the catalyst layer 21 and the carbon fiber current collector layer 41 will increase and the amount of $H_2O$ which travels from the polymer electrolyte membrane 10 and the catalyst layer 21 to the carbon fiber current collector layer 41 will increase. As a result, the $H_2O$ content of the polymer electrolyte membrane 10 will fall and the proton conductivity will drop, or the catalyst layer 21 will dry up and the effective catalyst area will be reduced, so a so-called "dry-up state" will result, the output of the fuel cell will fall, and power generation will not longer be able to be maintained in some cases.

Even when not the dry operating condition, if raising the amount of power generation (for example, performing high output operation at a $1A/cm^2$ or more current density), the amount of accompanying $H_2O$ which travels through the polymer electrolyte membrane 10 to the catalyst layer 21 side will increase. Furthermore, the amount of heat generated by the catalyst layer 21 will remarkably rise and the difference in water vapor pressure between the electrode layer 21 and the carbon fiber current collector layer 41 will increase, so a large amount of the $H_2O$ of the electrode layer 21 will travel to the carbon fiber current collector layer 41 side and similarly a dry-up state will occur.

If a dry-up state occurs, the polymer electrolyte membrane 10 would fall in lifetime, so a high humidification condition has to be employed. Even in stationary type fuel cells for home applications, operation under a low humidification condition is desirable from the viewpoint of lower power consumption, but the membrane lifetime would become shorter, so again a high humidification condition has to be employed. However, as explained above, originally the cathode side catalyst layer 21 easily becomes an $H_2O$ rich state, so if operated under a high humidification condition, the amount of water at the cathode side catalyst layer 21 will easily become excessive, that is, a so-called flooding state will easily occur. In the flooding state, the catalyst layer 21 and the carbon fiber current collector layer 41 are drenched in water, so the supply of oxygen-containing gas to the catalyst metal is cut off and the output of the fuel cell ends up falling. Further, in a high output operation (operation at $1A/cm^2$ or more current density), sometimes dry-up where water is stripped from the polymer electrolyte membrane 10 and the flooding state arising due to insufficient exhaust of $H_2O$ from the catalyst layer 21 to the carbon fiber current collector layer 41 side will simultaneously occur.

....J. of Power Sources, 154 (2006), pages 95-105, Djilali et al discloses a fluorescence microscopy technique for visualizing the transport of liquid water in unsaturated hydrophobic fibrous media and its application to the gas diffusion later of a PEM fuel cell. Fluorescein dye solution is pumped through the fibrous hydrophobic gas diffusion layer and imaged with fluorescence microscopy. J. of Power Sources, 170 (2007), pages 334-344, Advani et al discloses an investigation of liquid water formation and transport by direct experimental visualization in an operational transparent single-serpentine PEM fuel cell. The effectiveness of various gas diffusion layer materials in removing water away from the cathode and through the flow field over a range of operating conditions were examined. The anode channel was visualised to investigate the influence of the microporous layer on water transport.

To prevent dry-up and flooding, various techniques have been proposed (PLT 1 to 3). For example, PLT 1 proposes to gradually increase the porosity of the second carbon electrode from the upstream region to downstream region of the oxidizing agent channels. This means, in the fuel cell shown in FIG. 1, gradually increasing the porosity of the cathode side carbon fiber current collector layer 41 from the front side of the paper to the back side. Further, in PLT 2, if explained with reference to FIG. 1, it is proposed to form mixed layers comprised of a fluororesin and carbon black between the catalyst layers 20 and 21 and carbon fiber current collector layers 40 and 41 and to increase the thicknesses of the mixed layers at the inlet side parts 50a and 51a of the fuel gas and oxygen-containing gas (oxidizing agent gas) over the thicknesses of the outlet side parts 50b and 51b. However, with the systems described in PLTs 1 and 2, the porosity or thickness is changed in a slant in the planar directions of the carbon fiber current collector layers 40 and 41, so when stacking up and fastening unit cells, the pressure distribution will become uneven and the performance will not become stable.

PLT 3, if explained with reference to FIG. 1, discloses to form the carbon layers by coating the carbon fiber current collector layers (gas diffusion base material) 40 and 41 on the catalyst layer 20 and 21 sides and to divide these carbon layers into islands or a lattice in the plane and form porous parts between these divided parts of the carbon layers. However, in general, at the surface of a carbon fiber current collector layer, the carbon fibers are fluffed up and therefore there are a large number of surface relief parts. In PLT 3, the carbon fiber current collector layers are just coated with the carbon layers, so the fluff and surface relief are not reduced. Due to the pressure at the time of stack up, the catalyst layer 21 and the polymer electrolyte membrane 10 are liable to be scratched. Here, to prevent this scratching, referring to the later explained PLT 4, carbon layers formed into sheet shapes in advance may be stacked on the carbon fiber current collector layers. Even if thinking of this, the sheets (carbon layers) have to be divided. The porous parts which are formed by the division are extremely large, so pools of water form extremely easily and conversely flooding ends up easily occurring.

....US 2006/204833 discloses humidity adjusting films sandwiched between the catalyst electrode layers and carbon fiber collector layers of a solid polymer type fuel cell. These humidity adjusting films are constructed from a conductive carbonaceous powder and a polytetrafluoroethylene. The moisture permeability as measured by the method stipulated in JIS L 1099 (B-1) is 1200 to 4000 g/m$^2$/h and the mean thickness of the films is 5 to 100 $\mu$m.

Furthermore, PLTs 1 to 3 do not describe or suggest anything regarding what to do so as to prevent both dry-up and flooding in the broad range from a high humidification condition to a low humidification condition and, further, in the broad range from a high gas flow rate (low air utilization rate) to a low gas flow rate (high air utilization rate).

PLT 4, if explained with reference to FIG. 1, discloses to stack and join sheets formed in advance, obtained by paste extrusion and rolling of a PTFE powder-carbon black mixture, on the carbon fiber current collector layers (carbon paper) 40 and 41. However, PLT 4 does not describe anything regarding prevention of dry-up or prevention of flooding. Further, the above sheet material (PTFE powder-carbon black mixture) has a thickness of 0.2 mm (200 $\mu$m) or 0.6 mm (600 $\mu$m).

PLT 5 discloses, for facilitating the water management function of the porous carbon electrode base material inside the fuel cell and for improving the uniformity of the water management function in the plane, a porous carbon electrode base material comprised of a stack of at least two conductive porous base materials differing in gas permeation coefficients. However, PLT 5 does not teach anything regarding the moisture vapor transmission rate of the porous carbon electrode base material for controlling the water management function.

Citation List

Patent Literature

PLT 1: Japanese Patent Publication (A) No. 6-267562
PLT 2: Japanese Patent Publication (A) No. 2001-135326
PLT 3: Japanese Patent Publication (A) No. 2004-164903
PLT 4: Japanese Patent Publication (B2) No. 1-12838
PLT 5: Japanese Patent Publication (A) No. 2007-227008

Summary of Invention

Technical Problem

As general use gas diffusion layer (GDL) base materials, carbon cloth, carbon nonwoven fabric, carbon paper, etc. may be mentioned. Carbon cloth and carbon nonwoven fabric are structurally high in gas transmission rate and are suitable for use under a high RH (relative humidity) condition. Carbon paper is comprised of carbon fiber bonded by a binder and has a pore size distribution smaller than that of carbon cloth or carbon nonwoven fabric, so has a low gas transmission rate and is suitable for use under a low RH condition. As a typical GDL base material, TGP-H-060 (made by Toray) is known. Due to these features, in the past, the optimum GDL base material was mainly selected in accordance with the RH environment used.

However, to lower the cost and reduce the size of fuel cell systems, the humidifiers have been made smaller and the RH at the inlets of the feed gas has been lowered, while to increase the amount of power generation, the fuel cell has to be operated at a high current density, so a large amount of water is produced and the RH at the outlets becomes high. In this way, operation under complicated RH conditions is sought. That is, a GDL base material which has superior properties both under high RH and low RH operating conditions is being sought.

Further, from a different perspective, carbon paper is higher than carbon cloth and carbon nonwoven fabric in dimensional stability in the planar direction and thickness direction and superior to them in MEA workability. Further, it is high in bending rigidity, so it is superior in handling ability when stacked to form an MEA. Furthermore, carbon paper is thinner and easily to shape than carbon cloth or carbon nonwoven fabric, so facilitates reduction of the stack size. These physical features are extremely important in the design of automation processes for mass production of fuel cells. Specifically, carbon paper is good in dimensional stability after being cut in the process of cutting the GDL into predetermined dimensions and further is superior in ease of chucking and ease of movement in a robot conveyance process.

In this way, a GDL base material with a good balance of RH characteristics considering also performance and productivity has been hoped for, but none achieving both has yet been discovered.

Solution to Problem

According to the present invention, there is provided the use of a gas diffusion layer member according to appended claims 1 to 8.

.... In particular, there is provided the

(1) Use of a gas diffusion layer member in a solid polymer type fuel cell using hydrogen as a fuel gas, the gas diffusion layer member comprising a sheet-shaped gas permeable conductive base material having a thickness of 100 to 250 $\mu$m in range, and wherein a microporous layer (MPL) is further stacked, said MPL being a humidity adjusting film including a conductive carbon powder and polytetrafluoroethylene, characterized in that the gas diffusion layer member has a moisture vapor transmission rate by the measurement method defined in JIS (Japan Industrial Standard) L 1099:2006 of 1300 to 2000 g/m$^2$/h in range, wherein said gas permeable conductive base material has a density of 0.22 to 0.40 g/cm$^3$ in range.

Furthermore, according to the present invention, there is provided
(2) A use as set forth in (1), wherein the moisture vapor transmission rate is 1300 to 1800 g/m$^2$/h in range.
Furthermore, according to the present invention, there is provided
(3) A use as set forth in (2), wherein the moisture vapor transmission rate is 1450 to 1650 g/m$^2$/h in range.
Furthermore, according to the present invention, there is provided
(4) A use as set forth in any one of (1) to (3), wherein a penetration resistance determined by the four-terminal method at 1 kHz AC, pressure between terminals 981 kPa, room temperature is not more than 15 m$\Omega$cm$^2$.
Furthermore, according to the present invention, there is provided
(5) A use as set forth in any one of (1) to (4), wherein the gas permeable conductive base material has a thickness of 125 to 215 $\mu$m in range.
Furthermore, according to the present invention, there is provided
(6) A use as set forth in any one of (1) to (5), wherein the gas permeable conductive base material includes carbon paper which is treated for water repellency.
Furthermore, according to the present invention, there is provided (7) A use as set forth in any one of (1) to (6), wherein the gas diffusion layer member is provided on at least one side of a membrane electrode assembly (MEA), the MEA comprising a polymer electrolyte membrane having bonded to one side thereof a catalyst layer for anode and to the opposite side thereof a catalyst layer for cathode.
Furthermore, according to the present invention, there is provided
(8) A use as set forth in (7), where the gas diffusion layer member is provided on the cathode side of the MEA.

Advantageous Effects of Invention

According to the present invention, by keeping the moisture vapor transmission rate of the gas diffusion layer member at 1300 to 2000 g/m$^2$/h in range, a superior power generating performance is obtained under both high RH and low RH operating conditions. Further, according to the present invention, by providing both a gas permeable conductive base material which has a carbon paper structure and a humidity adjusting film which controls the moisture vapor transmission rate, it is possible to provide better power generation characteristics. In particular, using carbon paper as the gas permeable conductive base material is extremely advantageous in the design of an automation process for mass production of fuel cells due to the excellent dimensional stability of the gas diffusion layer member after cutting, the ease of chucking and ease of movement in the conveyance process, etc.

Brief Description of Drawings

FIG. 1 is a schematic perspective view showing a conventional fuel cell (unit cell).
FIG. 2 is a schematic perspective view showing one example of a fuel cell (unit cell) of the present invention.
FIG. 3 is a schematic cross-sectional view showing a method of measurement of moisture vapor transmission rate.
FIG. 4 is a scatter plot matrix showing the relationship between the moisture vapor transmission rate and gas transmission rate and the power generation performance.

Description of Embodiments

The gas diffusion layer member in a solid polymer type fuel cell for the use according to the present invention comprises a sheet-shaped gas permeable conductive base material of a thickness of 100 to 250 $\mu$m in range and the gas diffusion layer member has a moisture vapor transmission rate by the measurement method defined in JIS L 1099:2006 of 1300 to 2000 g/m$^2$/h in range.

In general, as a gas diffusion layer member for solid polymer type fuel cell use, a sheet material which has conductivity and gas transmission is used. As typical examples of such a sheet material, carbon paper, carbon woven fabric, carbon nonwoven fabric, carbon felt, or another gas permeable conductive base material treated to make it water repellent may be mentioned. Further, a porous sheet obtained from carbon particles and a fluororesin can also be used. As an example of such a porous sheet, one obtained by forming carbon black into a sheet using polytetrafluoroethylene as a binder may be mentioned. The inventors discovered among such general gas diffusion layer members, ones particularly having a moisture vapor transmission rate by the measurement method defined by JIS L 1099:2006 of 1300 to 2000 g/m$^2$/h in range can exhibit an excellent power generation performance in a solid polymer type fuel cell under both high RH and low RH operating conditions.

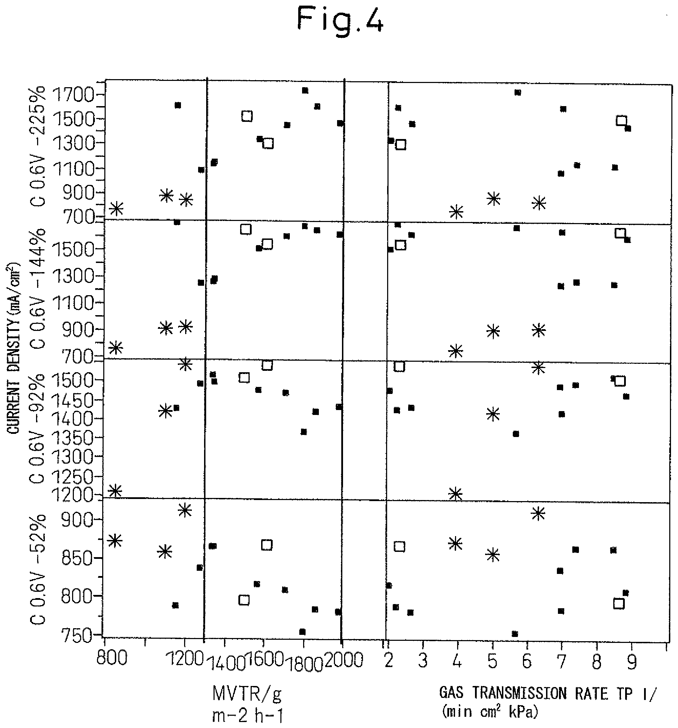

In conventional gas permeable conductive base materials, as described in PLT 5, attempts have been made to control the RH characteristics by focusing on the gas transmission rate. However, when the gas transmissive carbon base material greatly differs in structure, in particular the pore size distribution, as shown in the later explained embodiment data and FIG. 4, it was learned that there is substantially no correlation between the gas transmission rate and the RH characteristics and, rather, the moisture vapor transmission rate has a high correlation with the RH characteristics. In particular, it was confirmed that, regardless of the extent of the gas transmission rate, the balance of RH characteristics is good in the range of a moisture vapor transmission rate (MVTR) of the gas diffusion layer member of 1300 to 2000 g/m$^2$/h in range.

The gas diffusion layer member according to the use of the present invention has a moisture vapor transmission rate of 1300 to 2000 g/m$^2$/h, preferably 1300 to 1800 g/m$^2$/h, more preferably 1450 to 1650 g/m$^2$/h in range. If the moisture vapor transmission rate of the gas diffusion layer member exceeds 2000 g/m$^2$/h, in particular at the time of low RH operation or high output operation, dry-up will easily occur, while conversely if it falls below 1300 g/m$^2$/h, in particular at the time of high RH operation or high output operation, flooding will easily occur. The moisture vapor transmission rate of the gas diffusion layer member according to the use of the present invention is the value obtained by the measurement method defined in the Japan Industrial Standard (JIS) L 1099:2006.

The moisture vapor transmission rate of the gas diffusion layer member according to the use of the present invention can be controlled by the thickness of the gas permeable conductive base material. Specifically, the above range of the moisture vapor transmission rate of the gas diffusion layer member can be controlled by making the thickness of the gas permeable conductive base material 125 to 215 $\mu$m, preferably 130 to 190 $\mu$m in range. Further, the moisture vapor transmission rate of the gas diffusion layer member can be controlled by the density of the gas permeable conductive base material. Specifically, the above range of the moisture vapor transmission rate of the gas diffusion layer member can be controlled by making the density of the gas permeable conductive base material 0.22 to 0.47 g/cm$^3$ (according to the invention, 0.22 to 0.40 g/cm3), preferably 0.35 to 0.40 g/cm$^3$ in range. If the gas permeable conductive base material has a thickness below 125 $\mu$m or a density below 0.22 g/cm$^3$, the base material will become insufficient in physical strength and will deteriorate in handling ability or the base material will easily break by the compressive force upon fastening the fuel cell. Conversely, if gas permeable conductive base material has a thickness exceeding 215 $\mu$m or a density exceeding 0.47 g/cm$^3$ (according to the invention, the density does not exceed 0.40 g/cm$^3$), the base material will increase in electrical resistance, so the resistance at the time of cell power generation will increase and the voltage of the fuel cell will end up falling.

The gas diffusion layer member according to the use of the present invention has to have conductivity. Quantitatively, the gas diffusion layer member according to the use of the present invention has a penetration resistance by the four-terminal method (1 kHz AC, pressure across terminals of 981 kPa, room temperature) of preferably not more than 15 m$\Omega$cm$^2$, more preferably not more than 13 m$\Omega$cm$^2$. The smaller the penetration resistance, the better. The ideal lower limit value is 0 m$\Omega$cm$^2$, but realizing an actual penetration resistance of not more than 2 m$\Omega$cm$^2$ is difficult from the viewpoint of maintaining the porous structure for gas diffusion.

The gas permeable conductive base material forming the gas diffusion layer member according to the use of the present invention preferably includes carbon paper. As explained above, carbon paper is superior to carbon cloth or carbon nonwoven fabric in dimensional stability or workability into an MEA, is higher in bending rigidity and better in handling ability, and, furthermore, is thin and easy to shape, so facilitates reduction of the stack size. Such carbon paper can be produced as follows: Carbon fiber made of petroleum pitch, phenol, cellulose, acrylonitrile fiber, etc. as a raw material is cut into predetermined lengths and dispersed in water. This dispersion is made into paper on a metal mesh, to which polyvinyl alcohol or polyvinyl alcohol staple fiber or another binder is applied to obtain carbon fiber paper. Then, this carbon fiber paper is impregnated with a thermosetting resin to obtain thermosetting resin-impregnated carbon fiber paper. As a thermosetting resin, a phenol-based resin, epoxy-based resin, furan-based resin, melamine-based resin, unsaturated polyester-based resin, polyurethane-based resin, urea-based resin, etc. may be used. In particular, a high residual carbon ratio resin has the effect of bonding contact points of fibers together even after firing, and can easily give a carbon fiber woven fabric with a small rate of change of thickness at the time of compression, so is preferred. As a high residual carbon ratio resin, a phenol resin or epoxy resin may be mentioned, but a phenol resin is particularly preferable. Further, this phenol resin-impregnated carbon fiber paper is pressed by a flat heat press at a medium temperature, for example, 250°C, to adjust the thickness and simultaneously cure the phenol resin. Thereafter, this is carbonized in an inert gas (nitrogen) atmosphere at a high temperature, for example, 1500°C or more, preferably 2000°C or more, to obtain preferable carbon paper.

As explained above, the moisture vapor transmission rate of the gas diffusion layer member according to the use of the present invention can be controlled by the thickness of the gas permeable conductive base material. When the gas permeable conductive base material includes carbon paper, it is possible to control the type or length of the carbon fiber, amount of binder, amount of phenol resin, amount of compression by a press, number of sheets of resin-impregnated carbon fiber paper stacked before pressing, etc. so as to change the carbon paper in thickness and/or density and adjust it to any moisture vapor transmission rate (MVTR).

The gas diffusion layer member may, in accordance with need, be treated by a fluororesin to make it water repellent. The water repellency treatment means treatment dipping the gas diffusion layer member in a fluororesin-containing solution and then drying it. The dipping and drying may be repeated until the desired amount of fluororesin is deposited. As the fluororesin-containing solution, an aqueous dispersion of a fluororesin using a surfactant etc. may be used. A commercially available aqueous PTFE dispersion is also one preferred example of a fluororesin-containing solution. When reliably imparting water repellency to the gas diffusion layer member, the recommended amount of the fluororesin in the gas diffusion layer member is, for example, at least 0.3 mass%, preferably at least 1 mass%, still more preferably at least 3 mass%. On the other hand, if the amount of fluororesin becomes excessive, the water drainability will decline and flooding will easily occur. Therefore, the recommended amount of fluororesin in the gas diffusion layer member is, for example, not more than 65 mass%, preferably not more than 50 mass%, still more preferably not more than 30 mass%.

The gas permeable conductive base material containing the carbon paper is rough at the surface to a certain extent due to the denier and arrangement of the carbon fibers. When directly contacting the later explained catalyst layer, the contact area will be large and the contact resistance will end up becoming large as well. Further, compared with the distribution of pores of the catalyst layer, the distribution of pores of the gas permeable conductive base material is extremely large, so the water produced at the catalyst layer cannot be smoothly discharged and flooding will occur due to the liquid water near the catalyst layer and therefore the reaction sites will end up being remarkably decreased. To overcome such a problem, in the past, a conductive microporous layer (MPL) not containing any catalyst has been arranged between the catalyst layer and the gas permeable conductive base material. Specifically, a coating type MPL formed by coating and drying to a solid a slurry obtained by mixing carbon powder and a water repellency agent and an MPL of the humidity adjusting film described in Japanese Patent Publication (A) No. 2006-252948 are known. In the present invention, for example, by using the humidity adjusting film described in Japanese Patent Publication (A) No. 2006-252948, it becomes possible to control the moisture vapor transmission rate not only at the gas permeable conductive base material, but also at the MPL and the freedom of design is enhanced. Thus, the gas diffusion layer member according to the use of the present invention is comprised of a laminate of a gas permeable conductive base material and a humidity adjusting film, and the moisture vapor transmission rate of the gas diffusion layer member indicates the moisture vapor transmission rate of that laminate.

The humidity adjusting film is comprised of a conductive carbon-based powder and polytetrafluoroethylene (PTFE) and exhibits conductivity, gas permeability, and hydrophobicity overall. The conductive carbon-based powder is used for the conductivity, gas permeability, and hydrophobicity of the humidity adjusting film. For example, furnace black, lamp black, thermal black, acetylene black, or other carbon black, graphite, etc. may be used. These may be used alone or in mixtures or two or more types. The preferable conductive carbon-based powder is acetylene black or a mixture with the same. Acetylene black or a mixture with the same is superior in conductivity, water repellency, and chemical stability. PTFE is used to bind the conductive carbon-based powder to form a film. It is also preferable in the point that it can cover the surface of the conductive carbon-based powder to impart water repellency. For details on the humidity adjusting film, please see the above Japanese Patent Publication (A) No. 2006-252948.

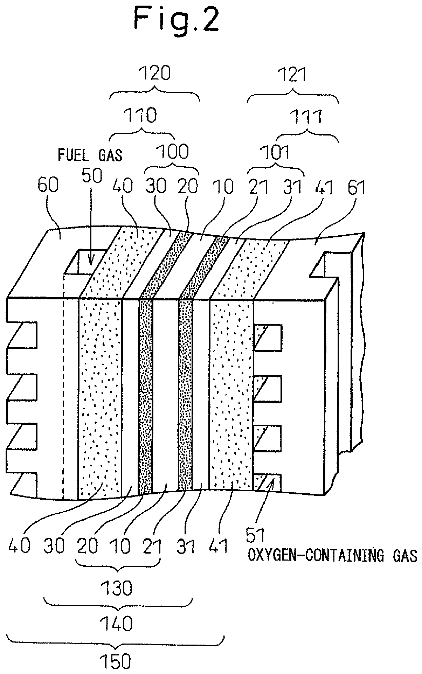

The gas diffusion layer member according to the use of the present invention can be combined with a polymer electrolyte membrane, a catalyst layer for anode, a catalyst layer for cathode, and a separator to form a solid polymer type fuel cell. FIG. 2 shows an example of a unit cell of a solid polymer type fuel cell according to the use of the present invention including the humidity adjusting film. The unit cell of a preferable solid polymer type fuel cell according to the use of the present invention is comprised of a membrane electrode assembly (MEA) 130, including a polymer electrolyte membrane 10 to one side of which a catalyst layer for anode 20 is bonded and to the opposite side of which a catalyst layer for cathode 21 is bonded, on both sides of which gas permeable conductive base materials 40 and 41 are provided via humidity adjusting films 30 and 31, respectively. In this case, the humidity adjusting films 30 and 31 and the gas permeable conductive base materials 40 and 41 respectively form stacked type gas diffusion layer members 110 and 111. Furthermore, at the outsides of the gas permeable conductive base materials 40 and 41, separators 60 and 61 are provided. The fuel cell operates by running fuel gas through the anode side channel 50 and running oxygen-containing gas through the cathode side channels 51. The gas diffusion layer members 110 and 111 are both preferably gas diffusion layer members having the specific moisture vapor transmission rate according to the present invention, but it is also possible to have either, in particular just the cathode side gas diffusion layer member 111, have the specific moisture vapor transmission rate according to the present invention. Further, it is also possible to provide either of the humidity adjusting films 30 and 31 at just one side, in particular the cathode side.

As the polymer electrolyte membrane, a perfluoro-based electrolyte, hydrocarbon-based electrolyte, etc. is preferable. In particular, a perfluoro-based electrolyte membrane is preferable. As a perfluoro-based electrolyte membrane, a sulfonic acid-based electrolyte membrane (for example, Nafion® (made by DuPont), GORE-SELECT® (made by Japan Goretex), etc.) is preferable, while a perfluorosulfonic acid resin-based electrolyte membrane reinforced by expanded porous polytetrafluoroethylene (GORE-SELECT® (made by Japan Goretex) etc.) is particularly preferable.

The EW (equivalent weight) of the polymer electrolyte membrane is, for example, recommended to be at least 700 (preferably at least 900) and not more than 1500 (preferably not more than 1300). Further, the thickness of the polymer electrolyte membrane is, for example, preferably at least 5 $\mu$m (preferably at least 10 $\mu$m) and not more than 100 $\mu$m (preferably not more than 60 $\mu$m).

As the catalyst layers, conventionally known ones may be used. For example, ones prepared from a paste-like ink which is comprised of carbon black or other conductive carbon particles (average particle size: 20 to 100 nm or so) on the surface of which fine particles of platinum or an alloy of platinum and another metal (for example, Ru, Rh, Mo, Cr, Fe, etc.) (average particle size of not more than 10 nm is preferable) are carried and a perfluorosulfonic acid resin-containing solution uniformly mixed in a suitable solvent (for example, alcohol) is used. The amount of platinum of the anode side catalyst layer 20 (fuel electrode) is, converted to metal platinum, preferably 0.01 to 0.5 mg/cm$^2$ or so, while the amount of platinum of the cathode side catalyst layer 21 (air electrode) is, converted to metal platinum, preferably 0.1 to 0.8 mg/cm$^2$ or so. The thickness of the catalyst layer is, for example, 5 to 30 $\mu$m or so.

When using a humidity adjusting film, it may be used as is for a unit cell. Further, it may also be stacked and joined with other functional layers (polymer electrolyte membrane 10, catalyst layers 20 and 21, gas permeable conductive base materials 40 and 41, etc.) in advance to obtain a composite film and use this for the unit cell. As preferable composite films, for example, (1) humidity adjusting films 100 and 101 with electrode functions which are comprised of humidity adjusting films 30 and 31 and catalyst layers 20 and 21 stacked and joined together; (2) stacked type gas diffusion layers 110 and 111 which are comprised of humidity adjusting films 30 and 31 and gas permeable conductive base materials 40 and 41 stacked and joined together; (3) gas diffusion layers 120 and 121 with electrode functions which are comprised of humidity adjusting films 30 and 31 on first surfaces of which gas permeable conductive base materials 40 and 41 are stacked and joined and on second surfaces of which the catalyst layers 20 and 21 are stacked and joined; (4) a fuel cell-use membrane electrode assembly 140 which is comprised of a polymer electrolyte membrane 10 sandwiched at the two surfaces by a pair of catalyst layers 20 and 21 to obtain a membrane electrode assembly 130 further sandwiched at the two surfaces by a pair of humidity adjusting films 30 and 31; (5) an integral gas diffusion layer type membrane electrode assembly 150 which is comprised of a membrane electrode assembly 140 on the two outsides of which gas permeable conductive base materials 40 and 41 are stacked; (6) a membrane electrode assembly 141 which is comprised of a polymer electrolyte membrane 10 sandwiched at the two sides by a catalyst layer for anode 20 and a catalyst layer for cathode 21 to obtain a membrane electrode assembly 130 at the cathode side of which a humidity adjusting film 31 is stacked; and (7) an integral gas diffusion layer type assembly 151 which is comprised of an integral gas diffusion layer type electrode assembly 141 on the two outsides of which gas permeable conductive base materials 40 and 41 are stacked and joined may be mentioned. The means of stacking and joining the layers is not particularly limited. A conventionally known stacking means (for example, stacking using an adhesive, stacking by heating and pressing, etc.) may be suitably employed, but if considering the gas transmission rate, heating and pressing treatment is preferable. In particular, when stacking humidity adjusting films 30 and 31 and water repellent gas permeable conductive base materials 40 and 41, by using heating and pressing treatment, a drop in the water repellency can also be prevented. Further, when stacking humidity adjusting films 30 and 31 and gas permeable conductive base materials 40 and 41, pressing while heating to a temperature of 300 to 400°C or so (in particular, 350°C or so) is most recommended. When the humidity adjusting films 30 and 31 are produced by the wet method, surfactant remains. The gas permeable conductive base materials 40 and 41 also have residual surfactant when treated for water repellency. If pressing while heating to a temperature of 300 to 400°C or so (in particular, 350°C or so), it is possible to carbonize the surfactant and stack and join the humidity adjusting films 30 and 31 and the gas permeable conductive base materials 40 and 41 by a single treatment. This is convenient.

Further, as the membrane electrode assembly 130, it is possible to use one obtained by directly coating a paste-like ink for forming the catalyst layers 20 and 21 on the polymer electrolyte membrane 10 using a doctor blade, bar coater, or other printing device, one obtained by coating and drying a paste-like ink in advance on a polytetrafluoroethylene, polypropylene, or other good releasability smooth film surface by a doctor blade, bar coater, or other printing device, then transferring the coating layer to a polymer electrolyte membrane 10 using a hot press (decal method), etc.

Note that, for the membrane electrode assembly (MEA) 130, PRIMEA® available from Japan Goretex can be used.

By alternately stacking, for 10 to 100 cells, MEAs obtained by bonding in the above way with separators and cooling parts so that the anode sides and the cathode sides of the MEAs become predetermined sides, it is possible to assemble a fuel cell stack. The fuel cell stack can be assembled by a conventional known method. Examples

The methods of measurement of the different parameters in the examples will be explained below:

Thickness
The base material or gas diffusion layer member was measured by a Mitsutoyo Micrometer PMU150-25DM to determine the thickness.

Basis weight

The base material or gas diffusion layer member was punched to obtain a sample of a size of $\phi4$ 8 mm which was then measured for mass by a precision electron scale. The mass was divided by the area of the sample size to determine the basis weight.

Density

The basis weight was divided by the thickness to calculate the density.

Penetration resistance

The gas diffusion layer member was clamped by a pair of gold-plated smooth metal blocks (area 2 cm$^2$) (pressure: 981 kPa (10 kgf/cm$^2$), 4-terminal method) and measured for resistance when running an alternating current of 1 kHz at room temperature (current: 100 mA) by an m$\Omega$ meter (made by Adex, product name: Digital Battery m$\Omega$ Meter (Model AX-126B)). The penetration resistance was found by the following formula.

$$\text{Penetration resistance } (\text{m}\Omega\text{cm}^2) = \text{measured resistance}$$
$$\text{value } (\text{m}\Omega) \times 2 \ (\text{cm}^2)$$

Gas transmission rate

16 mm inside diameter SUS tubes (inside area 2 cm$^2$) were pressed against the front and back of the gas diffusion layer member (1 MPa). Pressurized air (0.5 kPa) was run from one and the air flow rate was measured at the opposite side (outlet) by a membrane type flowmeter. The gas transmission rate was found by the following formula.

$$\text{Gas transmission rate } (\text{ml/min/cm}^2/\text{kPa}) = \text{flow rate}$$
$$(\text{ml/min})/2 \ (\text{cm}^2)/0.5 \ (\text{kPa})$$

Moisture vapor transmission rate

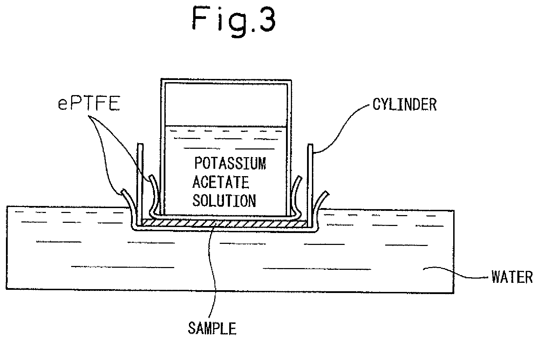

The moisture vapor transmission rate was determined based on JIS L 1099: 2006. This moisture vapor transmission rate measurement method utilizes the moisture absorption of potassium acetate to measure the amount of movement of moisture vapor to thereby quantify the degree of resistance of the gas diffusion layer member to the movement of moisture vapor. For the moisture vapor transmission rate according to the present invention, a modified method of the B-2 method described in JIS L 1099:2006 was employed to make it suitable for measurement of a hard gas diffusion layer member (see FIG. 3). Two sheets of about 13 $\mu$m thick polytetrafluoroethylene (ePTFE) film having a microporous structure of a porosity of about 80% were used. Further, the water temperature was made 23°C.

(Fabrication of base material)

1) Sample A (not of the claimed invention): Carbon fiber made of acrylonitrile fiber (made by Toray, Torayca® T300) and polyvinyl alcohol staple fiber (made by Kuraray, Vinylon) were mixed by a mass ratio of 100:25 to fabricate basis weight 30 g/m$^2$ carbon fiber paper. Next, the carbon fiber paper was impregnated with a phenol-based resin (made by Sumitomo Bakelite, product name SUMILITE RESIN PR-912) to 65 g/m$^2$, then two sheets were stacked and pressed by a flat heat press at 250°C, then carburized in an inert gas (nitrogen) atmosphere at 2000°C to obtain a thickness 203 $\mu$m, density 0.42 g/cm$^3$ carbon paper.

2) Sample B: The same procedure was performed except for adjusting the basis weight of the carbon fiber paper of the Sample A to 30 g/m$^2$ and adjusting the amount of impregnated resin to 60 g/m$^2$ to thereby obtain carbon paper of a thickness of 211 $\mu$m and a density of 0.37 g/cm$^3$.

3) Sample C: The same procedure was performed except for adjusting the basis weight of the carbon fiber paper of the Sample A to 24 g/m$^2$ and adjusting the amount of impregnated resin to 48 g/m$^2$ and, furthermore, suitably adjusting the press compression to thereby obtain carbon paper of a thickness of 163 $\mu$m and a density of 0.38 g/cm$^3$.

4) Sample D (not of the claimed invention): The same procedure was performed except for adjusting the basis weight of the carbon fiber paper of the Sample A to 24 g/m$^2$ and adjusting the amount of impregnated resin to 54 g/m$^2$ and, furthermore, suitably adjusting the press compression to thereby obtain carbon paper of a thickness of 147 $\mu$m and a density of 0.47 g/cm$^3$.

5) Sample E: The same procedure was performed except for adjusting the basis weight of the carbon fiber paper of the Sample A to 24 g/m$^2$ and adjusting the amount of impregnated resin to 38 g/m$^2$ and, furthermore, suitably adjusting the press compression to thereby obtain carbon paper of a thickness of 150$\mu$m and a density of 0.35 g/cm$^3$.

6) Sample F: The same procedure was performed except for adjusting the basis weight of the carbon fiber paper of the Sample A to 30 g/m$^2$ and adjusting the amount of impregnated resin to 27 g/m$^2$ and, furthermore, suitably adjusting the press compression to thereby obtain carbon paper of a thickness of 127 $\mu$m and a density of 0.31 g/cm$^3$.

8) Sample H: The same procedure was performed except for adjusting the basis weight of the carbon fiber paper of the Sample A to 52 g/m$^2$ and adjusting the amount of impregnated resin to 47 g/m$^2$ and, furthermore, suitably adjusting the press compression to thereby obtain carbon paper of a thickness of 160 $\mu$m and a density of 0.38 g/cm$^3$.

9) Sample I: The same procedure was performed except for adjusting the basis weight of the carbon fiber paper of the Sample A to 52 g/m$^2$ and adjusting the amount of impregnated resin to 47 g/m$^2$ and, furthermore, suitably adjusting the press compression to thereby obtain carbon paper of a thickness of 169 $\mu$m and a density of 0.35 g/cm$^3$.

10) Sample J: The same procedure was performed except for adjusting the basis weight of the carbon fiber paper of the Sample A to 34 g/m$^2$ and adjusting the amount of impregnated resin to 31 g/m$^2$ and, furthermore, suitably adjusting the press compression to thereby obtain carbon paper of a thickness of 138 $\mu$m and a density of 0.33 g/cm$^3$.

11) Sample K: The same procedure was performed except for adjusting the basis weight of the carbon fiber paper of the Sample A to 34 g/m$^2$ and adjusting the amount of impregnated resin to 38 g/m$^2$ and, furthermore, suitably adjusting the press compression to thereby obtain carbon paper of a thickness of 168 $\mu$m and a density of 0.30 g/cm$^3$.

12) TGP-H-060: Toray fuel cell-use electrode base material TGP-H-060

13) TGP-H-090: Toray fuel cell-use electrode base material TGP-H-090

14) TGP-H-120: Toray fuel cell-use electrode base material TGP-H-120

The thickness and density of the carbon paper (base material) are shown in the following Table 1.

(Water repellency treatment of base material)

An aqueous dispersion of PTFE (product name: D1-E, made by Daikin Industries) was diluted by water to adjust the PTFE concentration to 5%. Different samples of carbon paper having various thicknesses and densities were dipped into and then pulled out from the treatment solution. The excess treatment solution on the surface of the carbon paper was wiped off, then the paper was dried at 150°C for 1 hour, then was heat treated at 350°C for 2 hours to obtain a water repellent gas diffusion layer member (water repellent base material). Each water repellent base material was measured for thickness, density, gas transmission rate, penetration resistance, and moisture vapor transmission rate. The results are shown in the following Table 1.

(Fabrication of humidity adjusting film)

Acetylene black (conductive carbon powder) was poured into water slowly so as to prevent aerial dispersion. This was stirred by a stirring rod to get the water absorbed in the acetylene black. Next, a homogenizer was used to stir and disperse the acetylene black to prepare an aqueous dispersion of acetylene black. To this aqueous dispersion of acetylene black, a predetermined amount of an aqueous dispersion of PTFE (product name: D1-E, made by Daikin Industries) was added. The result was slowly stirred by a stirring machine to prepare a uniform mixed dispersion. Next, the speed of the stirring machine was increased to make the PTFE and acetylene black coprecipitate. The coprecipitate was collected by filtration and thinly spread on a stainless steel bat, then dried by a 120°C dryer for one day and night so as to obtain a mixed powder of acetylene black (conductive carbon powder) and PTFE. To this mixed powder, as a processing aid, a mineral spirit (made by Idemitsu Kosan, product name: IP Solvent 1016) was added. The result was pelletized by a preformer, the pellets were extruded by an extruder to a tape shape, then this was rolled to a film using two rolls. Furthermore, the film was rolled by the two rolls several times to adjust the film in thickness and density. The rolled film was dried in a 200°C dryer for 8 hours to expel the mineral spirit, then was heat treated at 350°C for 5 minutes to obtain a humidity adjusting film. The obtained humidity adjusting film had a mass ratio of acetylene black and PTFE of 70/30, an average thickness of 60 $\mu$m, a moisture vapor transmission rate of 3600 g/m²hr, and a penetration resistance of 8.6 m$\Omega$cm².

(Fabrication of gas diffusion layer member)

The above humidity adjusting film and the above water repellent base material were superposed so as to prevent wrinkles, then were pressed by two rolls which were heated to 300°C to thereby obtain a stacked type gas diffusion layer member. Each gas diffusion layer member was measured for penetration resistance and moisture vapor transmission rate. The results are shown in the following Table 1.

Table 1

| No. | Sample | Base material properties | | Water repellent base material properties | | | | | GDL properties | |
|---|---|---|---|---|---|---|---|---|---|---|
| | | Base material thickness /μm | Base material density / gcm$^{-3}$ | Water repellent base material thickness / μm | Water repellent base material density / gcm$^{-3}$ | Water repellent base material penetration resistance @1 MPa/ mohm cm$^2$ | Water repellent base material gas transmission rate TPI/(min cm$^2$ kPa) | Water repellent base material MVTR/g m$^{-3}$h$^{-1}$ | GDL penetration resistance @1 MPa/ mohm cm$^2$ | GDL MVTR/ gm$^{-2}$ h$^{-1}$ |
| 1 | A* | 203 | 0.42 | 203 | 0.43 | 9.29 | 6.97 | 1477 | 13.2 | 1275 |
| 2 | B | 211 | 0.37 | 211 | 0.38 | 7.17 | 8.48 | 1451 | 11.9 | 1342 |
| 3 | C | 163 | 0.38 | 163 | 0.39 | 6.66 | 8.60 | 1785 | 11.5 | 1490 |
| 4 | D* | 147 | 0.47 | 147 | 0.48 | 7.00 | 7.40 | 1507 | 13.0 | 1349 |
| 5 | E | 150 | 0.35 | 150 | 0.36 | 9.70 | 8.85 | 1912 | 12.1 | 1707 |
| 6 | F | 127 | 0.31 | 127 | 0.32 | 10.99 | 7.00 | 2441 | 13.8 | 1862 |
| 8 | H | 160 | 0.38 | 160 | 0.39 | 7.26 | 2.02 | 1880 | 10.3 | 1568 |
| 9 | I | 169 | 0.35 | 169 | 0.36 | 7.6 | 2.26 | 1892 | 10.5 | 1604 |
| 10 | J | 138 | 0.33 | 138 | 0.34 | 6.72 | 2.62 | 2334 | 11.1 | 1975 |
| 11 | K | 168 | 0.30 | 168 | 0.31 | 9.84 | 5.67 | 2227 | 14.9 | 1801 |
| 12 | TGP-H-060* | 191 | 0.44 | 191 | 0.45 | 7.12 | 6.30 | 1431 | 10.8 | 1202 |
| 13 | TGP-H-090* | 303 | 0.42 | 303 | 0.43 | 9.91 | 5.01 | 1173 | 13.5 | 1101 |
| 14 | TGP-H-120* | 355 | 0.48 | 355 | 0.49 | 9.94 | 3.90 | 910 | 11.7 | 850 |

* not of the claimed invention

(Fabrication of unit cell)

PRIMEA® (made by Japan Goretex) obtained by forming a catalyst layer containing 0.3 mg/cm$^2$ of platinum on the two surfaces of a thickness 20 $\mu$m Japan Goretex product GORE-SELECT® was used as a membrane electrode assembly. The above stacked type gas diffusion layer members were arranged at the two sides of the above membrane electrode assembly so that the humidity adjusting films contacted the catalyst layers. Furthermore, a gasket was superposed over the outer circumference of polymer electrolyte membrane, then a pair of graphite separators in which gas channels were formed were used to clamp this from the two sides. Next, this was clamped by two stainless steel end plates provided with current collectors so as to fabricate a unit cell.

(Power generation test)

Hydrogen gas and air were supplied to each obtained unit cell and the cell temperature and humidification rate of the gas were changed so as to change the RH in the cell. Specifically, by making the cell temperature 60°C and by making the humidification rate of hydrogen/air (RHin) 100RH%, the RH in the cell during power generation (RHout) became 225%, by making the cell temperature 70°C and by making the humidification rate of hydrogen/air 64RH%, the RH in the cell became 144%, by making the cell temperature 80°C and by making the humidification rate of hydrogen/air 42RH%, the RH in the cell became 92%, and by making the cell temperature 95°C and by making the humidification rate of hydrogen/air 24RH%, the RH in the cell became 52%. Note that the temperature of the humidifying tank was made 60°C at both the anode side and the cathode side. The current-voltage curve (IV curve) was measured under each of the above operating conditions and the current density at 0.6V was calculated. The results are shown in Table 2.

Table 2. Power Generation Performance

| No. | Sample | Current density (mA/cm$^2$) @0.6V-RHout225% | Current density (mA/cm$^2$) @0.6V-RHout144% | Current density (mA/cm$^2$) @0.6V-RHout92% | Current density (mA/cm$^2$) @0.6V-RHout52% |
|---|---|---|---|---|---|
| 1 | A* | 1073 | 1236 | 1487 | 836 |
| 2 | B | 1127 | 1248 | 1512 | 863 |
| 3 | C | 1516 | 1636 | 1503 | 794 |
| 4 | D* | 1140 | 1269 | 1494 | 864 |
| 5 | E | 1449 | 1586 | 1467 | 807 |
| 6 | F | 1607 | 1641 | 1417 | 784 |
| 8 | H | 1326 | 1499 | 1473 | 815 |
| 9 | I | 1295 | 1530 | 1535 | 866 |
| 10 | J | 1469 | 1606 | 1430 | 779 |
| 11 | K | 1737 | 1675 | 1366 | 753 |
| 12 | TGP-H-060* | 841 | 916 | 1543 | 913 |
| 13 | TGP-H-090* | 877 | 914 | 1422 | 858 |
| 14 | TGP-H-120* | 767 | 760 | 1212 | 873 |
| * not of the claimed invention | | | | | |

The relationship between the moisture vapor transmission rate of the gas diffusion layer member (MVTR) and the gas transmission rate of the water repellent base material of Table 1 and the current density of Table 2 was shown in FIG. 4 as a scatter plot matrix. As clear from FIG. 4, there is a correlation between the MVTR and the power generation performance (current density at 0.6V), but no correlation is seen between the gas transmission rate and the power generation performance. Further, the high RH condition and the low RH condition are basically contradictory operating conditions, but with an MVTR of 1300 to 2000 g/m$^2$/h, in particular 1300 to 1800 g/m$^2$/h in range, the power generation performance became high under both high RH (225%) and low RH (92%) conditions.

Industrial Applicability

The gas diffusion layer member according to the use of the present invention enables superior power generation performance under both high RH and low RH operating conditions, so can be advantageously used particularly in fuel cells with large load fluctuations and compact fuel cells in which low humidification operation is possible.

Reference Signs List

    10 polymer electrolyte membrane
    20, 21 catalyst layers
    30, 31 humidity adjusting films
    40, 41 gas permeable conductive base materials
    50 fuel gas channel
    51 oxygen-containing gas channel
    60, 61 separators
    100, 101 humidity adjusting films with electrode function
    110, 111 stacked type gas diffusion layer members
    120, 121 gas diffusion layers with electrode functions
    130, 140 membrane electrode assemblies
    150 integral gas diffusion layer type membrane electrode assembly

**Claims**

1. Use of a gas diffusion layer member in a solid polymer type fuel cell using hydrogen as a fuel gas, the gas diffusion layer member comprising a sheet-shaped gas permeable conductive base material having a thickness of 100 to 250 $\mu$m in range, and wherein a microporous layer, MPL, is further stacked, said MPL being a humidity adjusting film including a conductive carbon powder and polytetrafluoroethylene, **characterized in that** the gas diffusion layer member has a moisture vapor transmission rate by the measurement method defined in Japan Industrial Standard JIS L 1099:2006 of 1300 to 2000 g/m$^2$/h in range, wherein said gas permeable conductive base material has a density of 0.22 to 0.40 g/cm$^3$ in range.

2. The use as set forth in claim 1, wherein said moisture vapor transmission rate is 1300 to 1800 g/m$^2$/h in range.

3. The use as set forth in claim 2, wherein said moisture vapor transmission rate is 1450 to 1650 g/m$^2$/h in range.

4. The use as set forth in any one of claims 1 to 3, wherein the penetration resistance determined by the four-terminal method at 1 kHz AC, pressure between terminals 981 kPa, room temperature is not more than 15 m$\Omega$cm$^2$.

5. The use as set forth in any one of claims 1 to 4, wherein said gas permeable conductive base material has a thickness of 125 to 215 $\mu$m in range.

6. The use as set forth in any one of claims 1 to 5, wherein said gas permeable conductive base material includes carbon paper which is treated for water repellency.

7. The use as set forth in any one of claims 1 to 6, wherein the gas diffusion layer member is provided on at least one side of a membrane electrode 2 assembly, MEA, the MEA comprising a polymer electrolyte membrane having bonded to one side thereof a catalyst layer for anode and to the opposite side thereof a catalyst layer for cathode.

8. The use as set forth in claim 7, where said gas diffusion layer member is provided on the cathode side of said MEA.

**Patentansprüche**

1. Verwendung eines Gasdiffusionsschichtelements in einer Brennstoffzelle des Typs Festpolymer, die Wasserstoff als Brenngas verwendet, wobei das Gasdiffusionsschichtelement ein blattförmiges, gasdurchlässiges, leitendes Basismaterial mit einer Dicke im Bereich von 100 bis 250 $\mu$m umfasst und wobei eine mikroporöse Schicht, MPL, weiter aufgestapelt ist, wobei die MPL eine feuchtigkeitsanpassende Schicht einschließlich eines leitenden Kohlepulvers und Polytetrafluorethylen ist, **dadurch gekennzeichnet, dass** das Gasdiffusionsschichtelement eine Wasserdampfübertragungsrate gemäß der Messmethode laut dem Japan Industrial Standard JIS L 1099:2006 in einem Bereich von 1300 bis 2000 g/m$^2$/h aufweist, wobei das besagte gasdurchlässige, leitende Basismaterial eine Dichte im Bereich von 0,22 bis 0,40 g/cm$^3$ besitzt.

2. Verwendung gemäß Anspruch 1, wobei die Wasserdampfübertragungsrate in einem Bereich von 1300 bis 1800 g/m$^2$/h liegt.

3. Verwendung gemäß Anspruch 2, wobei die Wasserdampfübertragungsrate in einem Bereich von 1450 bis 1650 g/m$^2$/h liegt.

4. Verwendung gemäß einem der Ansprüche 1 bis 3, wobei der Eindringwiderstand, der mit der Vier-Leiter-Methode bei 1 kHz Wechselstrom, einem Druck zwischen den Leitern von 981 kPa, bei Raumtemperatur, bestimmt wurde, nicht über 15 m$\Omega$cm$^2$ liegt.

5. Verwendung gemäß einem der Ansprüche 1 bis 4, wobei das gasdurchlässige, leitende Basismaterial eine Dicke in einem Bereich von 125 bis 215 $\mu$m aufweist.

6. Verwendung gemäß einem der Ansprüche 1 bis 5, wobei das gasdurchlässige, leitende Basismaterial Kohlepapier beinhaltet, das für eine wasserabweisende Wirkung behandelt wurde.

7. Verwendung gemäß einem der Ansprüche 1 bis 6, wobei das Gasdiffusionsschichtelement auf mindestens einer Seite einer Membran-Elektroden-Anordnung, MEA, bereitgestellt wird, wobei die MEA eine Polymer-Elektrolyt-Membran umfasst, an der auf der einen Seite eine Katalysatorschicht für die Anode und auf der gegenüberliegenden Seite eine Katalysatorschicht für die Kathode gebunden ist.

8. Verwendung gemäß Anspruch 7, wobei das Gasdiffusionsschichtelement auf der Kathodenseite der MEA bereitgestellt ist.

**Revendications**

1. Utilisation d'un élément de couche de diffusion gazeuse dans une pile à combustible de type à polymère solide utilisant de l'hydrogène en tant que gaz combustible, l'élément de couche de diffusion gazeuse comprenant un matériau de base conducteur perméable au gaz en forme de feuille ayant une épaisseur dans une plage de 100 à 250 $\mu$m, et dans lequel une couche microporeuse, MPL, est en outre empilée, ladite MPL étant un film d'ajustement d'humidité incluant une poudre de carbone conductrice et du polytétrafluoroéthylène, **caractérisé en ce que** l'élément de couche de diffusion gazeuse a un taux de perméabilité à la vapeur d'eau selon le procédé de mesure défini dans la norme industrielle japonaise JIS L 1099:2006 dans une plage de 1300 à 2000 g/m$^2$/h, dans lequel ledit matériau de base conducteur perméable au gaz a une densité dans une plage de 0,22 à 0,40 g/cm$^3$.

2. Utilisation selon la revendication 1, dans laquelle le taux de perméabilité à la vapeur d'eau est dans une plage de 1300 à 1800 g/m$^2$/h.

3. Utilisation selon la revendication 2, dans laquelle le taux de perméabilité à la vapeur d'eau est dans une plage de 1450 à 1650 g/m$^2$/h.

4. Utilisation selon l'une quelconque des revendications 1 à 3, dans laquelle la résistance à la pénétration déterminée par la méthode à quatre bornes à 1 kHz AC, à une pression entre les bornes de 981 kPa, à température ambiante n'est pas supérieure à 15 m$\Omega$cm$^2$.

5. Utilisation selon l'une quelconque des revendications 1 à 4, dans laquelle ledit matériau de base conducteur perméable au gaz a une épaisseur dans une plage de 125 à 215 $\mu$m.

6. Utilisation selon l'une quelconque des revendications 1 à 5, dans laquelle ledit matériau de base conducteur perméable au gaz inclut du papier carbone qui est traité pour l'hydrophobie.

7. Utilisation selon l'une quelconque des revendications 1 à 6, dans laquelle l'élément de couche de diffusion gazeuse est prévu sur au moins un côté d'un ensemble électrode à membrane, MEA, le MEA comprenant une membrane électrolyte polymère sur laquelle est collée à un de ses côtés une couche catalyseur pour l'anode et à son côté opposé une couche catalyseur pour la cathode.

8. Utilisation selon la revendication 7, dans laquelle ledit élément de couche de diffusion gazeuse est prévu sur le côté cathode dudit MEA.

# Fig.1

FUEL GAS

60  50  40  20  10  21  41  61

50a

51b

51a

50b

51

OXYGEN-CONTAINING GAS

# Fig.2

# Fig.3

# Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006204833 A
- JP 6267562 A
- JP 2001135326 A
- JP 2004164903 A
- JP 1012838 B
- JP 2007227008 A
- JP 2006252948 A

**Non-patent literature cited in the description**

- **DJILALI.** *J. of Power Sources,* 2006, vol. 154, 95-105
- **ADVANI.** *J. of Power Sources,* 2007, vol. 170, 334-344